# EUROPEAN PATENT APPLICATION

(11) **EP 1 617 357 A1**
(43) Date of publication of application: **18.01.2006**
(21) Application number: 04016685.2
(22) Date of filing: 15.07.2004
(51) Int. Cl.: G06Q 10/00

(54) **Available-to-Promise (ATP) system communication interface**

(71) Applicant: SAP AG, 69190 Walldorf (DE)
(72) Inventor: Schick, Wolfram, 76137 Karlsruhe (DE)
(74) Representative: Schneider, Günther Martin

(57) **Abstract**

The invention provides a system for available-to-promise checks comprising: calculation means for evaluating queries concerning available-to-promise checks; an interface means which is adapted for receiving queries concerning available-to-promise checks from an external calling system, for transferring queries to the calculation means, for storing results of the available-to-promise checks, for outputting the results of the available-to-promise checks to the external calling system; the queries having the form of input tables comprising keys for handing over parameters from the external calling system to be used in the calculation means; and the results having the form of output tables comprising the results according to the query; whereby the input tables and the output tables being separated from each other in order to divide the result of the available-to-promise checks from the query data itself and so to provide one-to-one identification of input table and output table.

## Description

This application relates to the planning and control of material and information flows, and more particularly to systems planning and optimizing material and information flows.

The flow of goods and services from a point of origin to a point of consumption is known as supply chain, and the management of interconnected entities involving one or more supply chains is known as supply chain management (SCM).

A system for supply chain management may be computer-implemented and may often include one or more databases representing the supply chains which are to be managed.

A fundamental activity of a supply chain management system may be concerned with matching demand of goods and services to supply of goods and services. This process is known as demand-supply matching.

Demand-supply matching involves the assessment of the availability of intermediate and/or final goods or services in a supply chain.

In a supply chain management system an assessment of availability, also called an availability check, may be carried out by querying one or more databases which represent the supply chains to be managed.

An availability check is also called Available-to-Promise (ATP). Available-to-Promise (ATP) investigates whether a promised delivery can in fact be made, and if so when.

Typically, ATP systems are embedded into complex planning and organizing systems, such as Advanced Planner and Optimizer (APO) delivered by SAP Aktiengesellschaft, Walldorf, Germany. Such systems may deal with high amounts of data originating from several internal and/or external sources. On the other hand, an APO/ATP system may deliver its results to another part of the complex system for processing the actual ATP check. As long as that system is from the same vendor, complete knowledge to interface that system with the ATP system should always be available. If, however, that system comes from a third party, there is a problem to interface the third-party system with the ATP of the other vendor.

It is an object of the present invention to provide a system and a method for querying one or more databases of a supply chain management (SCM) system.

This and other objects of the present invention are achieved by the system of claim 1 and the method of claim 9.

Accordingly, provided is a system for providing available-to-promise checks,
the system comprising:
calculation means for evaluating queries concerning available-to-promise checks;
storing means for the results of the available-to-promise checks;
an interface means which is adapted
   for receiving queries concerning available-to-promise checks from an external calling system,
   for transferring the queries to the calculation means, and
   for outputting results of the available-to-promise checks to the external calling system;
   the queries having the form of input tables comprising keys for handing over parameters from the external calling system to be used in the calculation means; and
   the results having the form of output tables comprising the results according to the query;
   whereby the input tables and the output tables are separated from each other in order to divide the results of the available-to-promise checks from the query data itself and to provide one-to-one identification of
   respective input table and output table.

The interface means may be further adapted for handling confirmation of predecessor documents by reference.

The tables transferred from/to the interface may comprise keys referring to ide ntify current and predecessor queries of the calling system.

Further, profile data may be provided to the external system for adapting the interface means to the external system.

In order to provide for further standardization the interface means can be adapted for communication on the basis of a remote function call (RFC).

In a particular advantageous embodiment of the invention the communication transmitted via the interface means is free from proprietary information of the APO system.

In the context of a special embodiment, the interface means is adapted for receiving a set of data fields specifying a business process to be evaluated.

In order to provide an enhanced adaptability, a part of customizing profile associated with the calling system is managed in the APO system, the part being read upon call by the external system.

The invention comprises also a method of communicating with an external system.

Furthermore, the invention comprises computer-readable storage media comprising program code for performing the inventive methods, when loaded into a computer system.

It is an advantage of the present invention that an interface is provided via which communication with an arbitrary third-party system is easily enabled. Complex adaptations to data structures of the APO systems are not needed.

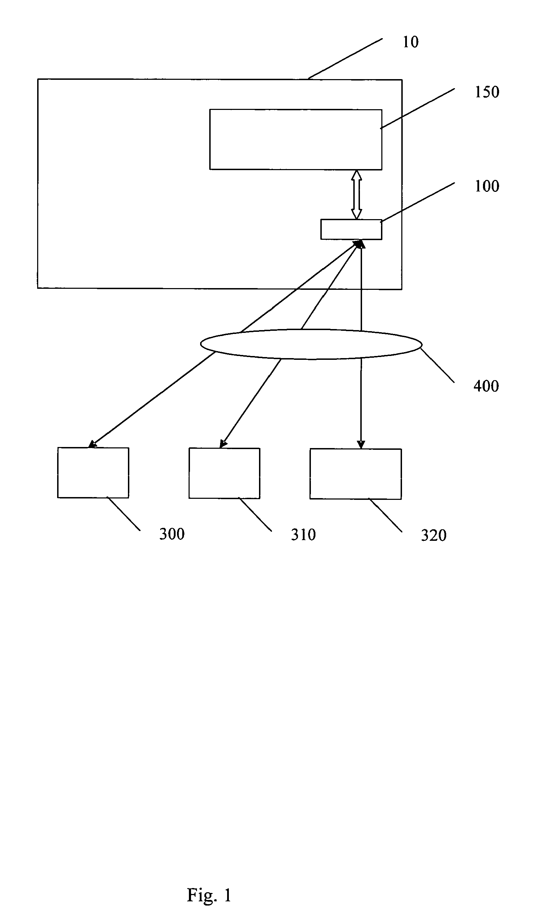

The invention is further described with reference to the drawing, wherein
Fig. 1 shows a preferred embodiment of the present invention.

The preferred embodiment of the present invention according to Fig. 1 is used within a global Advanced Planner and Optimizer (APO) system 10, which supports supply chain management (SCM).

The APO can be thought as a planning engine coordinating planning and optimizing activities of a plurality of various external enterprise resource planning (ERP) systems 300, 310, 320.

For a planning or optimizing task to be carried out, the APO system 10 is fed with queries from the various external enterprise resource planning (ERP) systems 300, 310, 320 which are provided by the same vendor, or by any other vendor. These queries are passed by the interface 100 comprised in the APO system 10 to the ATP component 150 comprised in the APO system 10. The interface 100 is adapted for performing the communication between the APO system and the calling external systems 300, 310, 320. Such calls originating from one of the external systems 300, 310, 320, for instance the system 300, may comprise queries as to available-to promise (ATP) calculations which are to be performed by the ATR component 150 of the APO system 10. The results according to the calculations are transferred via the interface 100 back to the calling external system 300. The communication between the interface 100 and the external system 300 is performed on the basis of a standard RFC link 400.

The communication between the interface 100 and the external system 300 is done by exchanging tables which comprise relevant parameter and result data, respectively. The tables are separated in input tables and output tables. Furthermore, no data proprietary to the APO system are transmitted to the external system 300. This simplifies considerably the adaptation of external calling systems 300.

The communication via the interface 100 is divided in input and output fields, whereby the structures have the following fields.

First, the global parameters, which are received by the interface 100 are described.

**BAPIGLOBPAR_IN (Input):**

| Name | Datatype | Short text |
|---|---|---|
| TRANSACTION_GUID | SYSUUID_C | ATP: Transaction GUID |
| USER_NAME | SYUNAME | SAP System, User Logon Name |
| CALLING_LOGICAL_SYSTEM | LOGSYS | Logical system of BAPI caller |
| APPLICATION | /SAPAPO/BAPI_ ANWDG | ATP: Calling application |
| INIT_INDICATOR | /SAPAPO/INITI ND | ATP: Initialization Indicator for the Check |
| ENQUEUE_MODE | /SAPAPO/ENQM OD | ATP: Mode for Locks and Delta Records During Check |

Only one global parameter is outputted:

**BAPIGLOBPAR_OUT (Output)**

| Name | Datatype | Short text |
|---|---|---|
| TRANSACTION_GUID | SYSUUID_C | ATP: Transaction GUID |

All the following structures are tables:

### Field Catalogue

The field catalogue has a generic structure, rather than a predefined set of specified parameters. This field catalogue structure contains information which is specific to the processes of the calling system. The data in the field catalogue is used for scheduling purposes and advanced available-to-promise methods.

### Requirement Groups

The requirement group table input structure is an optional input table, which should be filled in case of Delivery groups, sales BOMs or components check, only. It has the following fields:

**BAPIREQGRP_IN (Input)**

| Name | Datatype | Short text |
|---|---|---|
| REQUIREMENT_GROUP_INDEX_IN | /SAPAPO/REQSUBGR PIDX | ATP requirements group index |
| EXTERNAL_NUMBER | /SAPAPO/EXT_CGNU M | ATP: External Number of a Correlation Group |
| REQUIREMENT_GROUP_TYPE | /SAPAPO/REQSUBGR PTYP | ATP: Type of Requirements Group |
| CORRELATION_MODE | /SAPAPO/CCMOD | Correlation Calculation Mode (PP) |
| CORRELATION_PROFILE_ID | /SAPAPO/ATP_CORR PROFILE | ATP: Correlation Calculation Profile |
| FORCED_CORRELATION_ TYPE | /SAPAPO/CORRTYP_ FORCE | ATP: Overriding Correlation Calculation Type |
| CORRELATION_TIMESTAMP | /SAPAPO/CORRTMS | ATP: Time Stamp for Correlation |
| REQUIREMENT_HEADER_TIMEST AMP | /SAPAPO/REQTMS_H D | ATP: Requirements Date (Time Stamp) of Finished Product |
| REQUIREMENT_HEADER_QUANTI TY | /SAPAPO/REQQTY_H D | ATP: Requirement Quantity of Finished Product |
| REQUIREMENT_HEADER_UNIT | /SAPAPO/MEINS | Base Unit of Measure |

The requirement group table is a pure output table.

**BAPIREQGRP_OUT (Output):**

| Name | Datatype | Short text |
|---|---|---|
| PRED_REQUIREMENT_IT EM_INDEX | /SAPAPO/REQITM IDX | ATP: Index for an ATP Requirements Schedule Line |
| ORIG_REQUIREMENT_IT EM INDEX | /SAPAPO/OM_REQ IDX | ATP: Index for an ATP Requirement |
| REQUIREMENT_GROUP_INDEX_O UT | /SAPAPO/REQGRP IDX | ATP requirements group index |
| TOTAL_CONFIRMED_TIMES TAMP | /SAPAPO/TCCTMS_HD | ATP: Total Confirmation Date (Time Stamp) for Finished Prod. |
| CONFIRMED_QUANTITY | /SAPAPO/CNFQTY_HD | ATP: Confirmed Quantity at Finished Product Level |
| PARTIAL_CONFIRMED_TIME STAMP | /SAPAPO/PCFTMS | ATP: Partial Confirmation Date (Time Stamp) |
| PARTIAL_CONFIRMED_QUAN TITY | /SAPAPO/PCFQTY | ATP: Partial Confirmation Quantity |
| TOTAL_CONFIRMED_DIFFE RENCE | /SAPAPO/TCCDIFF | ATP: Difference of Total Confirmation in Working Time |
| CONFIRMATION_FACTOR | /SAPAPO/CNFFAC | ATP: Confirmation Factor |
| PARTIAL_CONFIRMED_DIFFE RENCE | /SAPAPO/PCFDIFF | ATP: Difference in Working Time of 1 st Partial Confirmation |

### Requirements:

In order to make the adaptation to an arbitrary external system as easy as possible, there is in the interface table only one line per requirement.

**BAPIREQ_IN (Input) and BAPIREQ_OUT (Output)**

| Name | Datatype | Short text | Input / Outp |
|---|---|---|---|
| REQUIREMENT_INDEX | /SAPAPO/OM_REQIDX | ATP requirements index | I/O |
| REQUIREMENT_GROUP_INDE X | /SAPAPO/REQGRPIDX | ATP requirements group index | I/O |
| POSITION_IN_SUB_GROUP | /SAPAPO/SUBGRPSEQ | ATP: Requirement item in a requirements subgroup | I |
| PRODUCT | /SAPAPO/EXT_MATNR | External Product Indicator | I/O |
| LOCATION | /SAPAPO/EXT_LOCNO | External Location ID | I/O |
| LOCTYPE | /SAPAPO/C_LOCTYPE | Location Type | I/O |
| SUB_LOCATION | /SAPAPO/SUBLOC | Sublocation | I/O |
| PRODUCT_VERSION | /SAPAPO/VERSION | Version | I/O |
| SPEC_STOCK_IND | /SAPAPO/SOBKZ | Special Stock Indicator | I/O |
| SPEC_STOCK_KEY | /SAPAPO/SSKEY | Key for Special Stock Segment | I/O |
| SPEC_LOGICAL_SYST EM | LOGSYS | Logical system for Special Stock | I/O |

| | | | | | |
|---|---|---|---|---|---|
| | | | Segment | | |
| ORDER_ITEM_GUID | SYSUUID_C | | ATP: Item Guid (/SAPAPO/POSG UID) | | I/O |
| LOGICAL_SYSTEM | LOGSYS | | Logical system | | I |
| EXT_ORDER_NUMBE R | /SAPAPO/DELNR | | Order Number from Connected OLTP System | | I |
| ITEM_NUMBER | /SAPAPO/DELPS | | Order Item | | I |
| ORDER_TYPE | /SAPAPO/R3TR | | | | |
| PERSIST_ID | SYSUUID_C | | Instance Number (Persistent) CUX_PERSIST_I D | | I/O |
| ACTION_METHOD | /SAPAPO/ATP_ACTMET lete, | | ATP: Check, De-Update | | I |
| CHECK_PROFILE | /SAPAPO/REQPRF | | ATP: Requirements profile | | I |
| SCHEDULING_INDICATOR | /SAPAPOBAPI_SCHIND | | ATP: Indicator: Execute Scheduling | | I |
| TRANSACTION_TYPE | /SAPAPO/TRTYP | | Transaction type | | I |
| ACTIVITY_TYPE | /SAPAPO/ACTYP | | Rules-based ATP: Action Type | | I |
| RESULT_MODE | /SAPAPO/RESMOD | | ATP: Results Mode | | I |
| STRUCTURE_INDICATOR | /SAPAPO/STRUCIND | | ATP structure indicator | | I |
| FIXED_FLAG | /SAPAPOBAPI_FIXFLG | | Fixed indicator (PP-q & SD tq) | | I |
| SUBSTITUTION_REASON | /SAPAPO/SUREA | | Rules-based ATP: Substitution reason | | O |
| ERROR_FLAG | /SAPAPO/ERRFLG | | ATP: Error occurred while checking a requirement | | O |
| REQUIREMENT PROFILE | | | | | |
| ATP_CATEGORY | | /SAPAPO/ATPCAT | | Category of Stock/Receipt/ Requirement/Forecast | X |
| ORDER_CATEGORY | | /SAPAPO/ATPCAT | | Category of Stock/Receipt/ Requirement/Forecast | N |
| BUSINESS_EVENT | | /SAPAPO/PRREG | | Business event | X |
| CHECK_MODE | | /SAPAPO/ATP_CHMOD | | Check Mode | X |
| ALLOCATION_MODE | | /SAPAPO/DEM_ALLOC | | Assignment Mode | X |
| TEMP_OBJ_MODE | | /SAPAPO/DELTAIND | | ATP: Indicator | X |

| | | | |
|---|---|---|---|
| | | for writing temporary objects | |
| TECHNICAL_PROCESS | /SAPAPO/TPROC | Rules-based ATP: Technical Scenario | X |
| BUSINESS_PROCESS | /SAPAPO/BPROC | Rules-based ATP: Business transaction | X |
| DURATION_TIMESTAMP | /SAPAPO/OM_DURTMS | ATP: Duration of the lifetime of non-persistent temporary objects | N |

### Requirement Item:

**BAPIREQITM_IN (Input) and BAPIREQITM_OUT (Output)**

| Name | Datatype | Short text | Input / Outp. |
|---|---|---|---|
| REQUIREMENT_ITEM_INDEX | /SAPAPO/REQITMIDX | ATP: Index for an ATP Requirements Schedule Line | I/O |
| REQUIREMENT_INDEX | /SAPAPO/OM_REQIDX | ATP: Index for an ATP Requirement | I/O |
| REQUIREMENT_TIMESTAMP | /SAPAPO/REQTMS | ATP: Requirements Date (Time Stamp) | I/O |
| REQUIREMENT_QUANTITY | /SAPAPO/REQQTY | ATP: Requirement Quantity | I/O |
| WITH-DRAWN_QUANTITY | /SAPAPO/WITQTY | ATP: Quantity Withdrawn | I |
| REFERENCE_TIMESTAMP | /SAPAPO/REFTMS | ATP: Reference Date | I |
| REFERENCE_TIME_TYPE | /SAPAPO/EV_TYPE | Scheduling Type | 1 |
| SCHEDULE_LINE | /SAPAPO/DELET | Schedule Line Number for Order/Planning Element | I |
| CUMULATION_TYPE | /SAPAPO/CUMTYP | OnLine versus batch | I |
| USED_RECEIPTS_IN_P AST | /SAPAPO/OM_USEDRIP | ATP:conf. Using receipt | O |
| | | elem. in past | |
| PROD_ALLOC_CUM_Q UANTITY | /SAPAPO/OM_CUMQTY | ATP: max avail qnty for prod allocation | O |
| PROD_AVAIL_CUM_Q UANTITY | /SAPAPO/OM_CUMQTY | ATP: max avail qnty for prod avail. | O |
| FORECAST_CUM_QUANTIT Y | /SAPAPO/OM_CUMQTY | ATP: max avail qnty for forecast | O |

### Results:

The available-to-promise results are comprised in an output and an input table. The input table is to enable the update functionality.

**BAPIRESULTS_IO (Input & Output)**

| Name | Datatype | Shorttext |
|---|---|---|
| REQUIREMENT_ITEM_INDEX | /SAPAPO/REQITMID X | ATP: Index for an ATP Requirements Schedule Line |
| RESULT_INDICATOR | /SAPAPO/RESIND | ATP: Indicator for Origin of Result |
| RESULT_INDEX | /SAPAPO/RESIDX | ATP: Index of an ATP results row |
| CONFIRMED_TIMESTAMP | /SAPAPO/CNFTMS | ATP: Confirmation date (time stamp) |
| CONFIRMED_QUANTITY | /SAPAPO/CNFQTY | ATP: Confirmed Quantity |

The scheduling results are comprised in a pure output table. Only the final result is scheduled.

**BAPIRES_SCHED (Output)**

| Name | Datatype | Shorttext |
|---|---|---|
| RESULT_INDEX | /SAPAPO/RESIDX | ATP: Index of an ATP results row |
| TIME_TYPE | /SAPAPO/EV_TYPE | Date Type |
| SCHEDULED_TIMESTAMP | /SAPAPO/CNFTMS | ATP: Confirmation date (time stamp) |
| TIME_ZONE | TIMEZONE | Time Zone |

### References:

This is a pure input table, containing the references to predecessor processes. Predecessor processes are processes from external systems (300, 310, 320) which have used the ATP-component (150) of the APO system (10) some time before. The results of these former processes have been stored in the APO-system (10) and should now be replaced by the new results of the current process.
Instead of specifying the whole key, the identification is done by a reference to the requirement.

**BAPIREF_IN (Input)**

| Name | Datatype | Short text |
|---|---|---|
| REQUIREMENT_INDEX | /SAPAPO/OM_R EQIDX | ATP requirements index |
| PRED_EXT_ORDER_NU MBER | /SAPAPO/DELN R | Order Number from Connected OLTP System |
| ORDER_TYPE | /SAPAPO/R3TR | |
| PRED_ATP_CATEGORY | /SAPAPO/ATPC AT | Category of Stock/Receipt/Requirement/Fore cast |
| PRED_ITEM_NUMBER | /SAPAPO/DELP S | Order Item |
| PRED_ORDER_ITEM_G UID | SYSUUID_C | ATP: Item Guid (/SAPAPO/POSGUID) |
| CONSIDER_QUANTITY_FL AG | /SAPAPO/CNSF LG | ATP: Consider Copied Quantities for Reference Documents |
| PRED_LOGICAL_SYST EM | LOGSYS | Logical system |

The APO will not accept references for documents, which do not have requirements.

Furthermore, there are seven standard interface tables for configuration and allocation usage data. All configuration tables are input and output tables. The allocation usage table is a pure output table.

In addition to that, there are three standard interface tables, namely an output table containing error messages, an output table, which may contain customer specific fields, and an input table, which may contain customer specific fields.

The present techniques can be implemented in digital electronic circuitry, or in computer hardware, firmware, software, or in combinations of them. System of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

The foregoing descriptions of specific embodiments of the present invention have been presented for the purposes of illustration and description. They are not intended to be exhaustive or to limit the invention to the precise forms disclosed, and obviously many modifications and variations are possible in the light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the claims appended hereto.

## Claims

1. System for providing available-to-promise checks, the system comprising:
calculation means (150) for evaluating queries concerning available-to-promise checks;
an interface means (100) which is adapted
for receiving queries concerning available-to-promise checks from an external calling system (300),
for transferring queries to the calculation means (150),
for storing results of the available-to-promise checks,
for outputting the results of the available-to-promise checks to the external calling system (300);
the queries having the form of input tables comprising keys for handing over parameters from the external calling system (300) to be used in the calculation means (150); and
the results having the form of output tables comprising the results according to the query;
whereby the input tables and the output tables being separated from each other in order to divide the result of the available-to-promise checks from the query data itself and to provide one-to-one identification of respective input table and output table.

2. The system according to claim 1, wherein the interface means (100) is further adapted for handling confirmation of predecessor processes by reference.

3. The system according to claim 1 or 2, wherein the input tables comprise keys referring to identify current and predecessor queries of the calling system.

4. The system of one of the preceding claims, wherein profile data is provided to the external system for adapting the interface means (100) to the external system.

5. The system of one of the preceding claims, wherein the interface means (100) is adapted for communication on the basis of a remote function call.

6. The system of one of the preceding claims, wherein the communication transmitted via the interface means (100) is free from proprietary information of the APO system.

7. The system of one of the preceding claims, wherein the interface means (100) is adapted for receiving a set of data fields specifying a business process to be evaluated.

8. The system of one of the preceding claims, wherein a part of customizing profile associated with the calling system (300) is managed in the APO system, the part being read upon call by the external system.

9. Method for providing available-to-promise checks from a calculation means (150), the method comprising:
evaluating queries concerning available-to-promise checks;
receiving queries concerning available-to-promise checks from an external calling system (300),
transferring queries to the calculation means (150),
storing the results of the available-to-promise checks, and
outputting results of the available-to-promise checks to the external calling system (300);
wherein the queries having the form of input tables comprising keys for handing over parameters from the external calling system (300) to be used in the calculation means (150); and
the results having the form of output tables comprising the results according to the query;
whereby the input tables and the output tables being separated from each other in order to divide the result of the available-to-promise checks from the query data itself and to provide one-to-one identification of respective input table and output table.

10. The method according to claim 9, further comprising handling confirmation of predecessor documents by reference.

11. The method according to claim 9 or 10, wherein the tables comprise keys referring to identify current and predecessor queries of the calling system.

12. The method of one of claims 9 - 11, wherein profile data is provided to the external system for adapting the interface means (100) to the external system.

13. The method of one of claims 9 - 12, further performing communication on the basis of an RFC call.

14. The method of one of claims 9 - 13, wherein the communication transmitted via the interface means (100) is free from proprietary information of the APO system.

15. The method of one of claims 9 - 14, further comprising: receiving a set of data fields specifying a business process to be evaluated.

16. The method of one of claims 9 - 15, wherein a part of customizing profile associated with the calling system (300) is managed in the APO system, the part being read upon call by the external system (300).

17. A computer-readable storage medium comprising program code for performing the method according to one of claims 9 - 16, when loaded into a computer system.
